# EUROPEAN PATENT APPLICATION

(11) **EP 2 984 938 A1**
(43) Date of publication of application: **17.02.2016**
(21) Application number: 14180127.4
(22) Date of filing: 07.08.2014
(51) Int. Cl.: A23L 11/00, A23L 13/40, A23L 13/60, A23L 13/50, A23L 13/70, A23L 13/00, A23J 1/14, A23J 3/14, A23L 17/00

(54) **Composition comprising mung bean protein, processed livestock meat and pickling solution**

(71) Applicant: Fuji Oil Company, Limited, Izumisano-shi Osaka 598-8540 (JP)
(72) Inventor: Motoyama, Takayasu, Tsukubamirai-shi, Ibaraki 300-2497 (JP); Sakuma, Jun, Tsukubamirai-shi, Ibaraki 300-2497 (JP)
(74) Representative: Matthews, Derek Peter

(57) **Abstract**

The present invention provides a powder composition comprising a mung bean protein, wherein all or a portion of the mung bean protein is heat denatured. The composition can be utilized in pickling solutions and processed livestock meat.

## Description

### Technical Field

The present invention relates to a composition comprising a mung been protein, to processed livestock meat and to a pickling solution.

### Background of the Invention

Protein materials used in foods must often be soluble in salt solutions during food production. Examples of such foods include processed livestock meats, fermented foods such as cheeses and yogurts, health beverages such as DBB (Dry Blended Beverages), and boiled fish paste products such as kamaboko. Processed livestock meats include livestock meat ham, livestock meat sausages, livestock meat bacon, barbecued pork and deep-fried livestock products (pork cutlets and tempura).

Processed livestock meat is produced by methods that involve mixing or injecting a meat with "pickling solutions", i.e. liquids containing salts, sweeteners such as saccharides, spices, binding reinforcers such as polyphosphates, coloring agents such as nitrates, emulsification stabilizers such as casein sodium, antioxidants such as ascorbic acid, seasonings such as sodium glutamate and preservatives such as potassium sorbate. For production of ham, in particular, the pickling solutions contain binding materials such as soybean proteins (protein materials) for the purpose of achieving improved water retention, fat retention and binding properties of the product, or improving the mouthfeel, including hardness and elasticity.

Because the pickling solutions used for production of processed livestock meat contain abundant minerals as mentioned above, when a protein material is added to the pickling solution it is very important for the protein material to be soluble in salt solutions, in order to achieve the purpose of the addition. In Eur. J. Biochem. 258, 854-862, 1998, J. Agric. Food Chem. 53, 3650-3657, 2005, for example, it has been reported that β-conglycinin and glycinin, which are major constituent components of soybean protein isolate, are highly soluble in high-salt-concentration aqueous solutions. However, the steps for actually producing soybean protein isolate as a food material include a sterilizing step, and it is known that when heat sufficient to accomplish sterilization is applied, the solubility of soybean protein isolate in salt solutions decreases. Therefore, when soybean protein isolate is to be used for a pickling solution, it is preferred to avoid heat sterilization in order to maintain the solubility in salt solutions. At the current time, however, sterilization methods other than heat sterilization are not an option due to production cost issues.

In JP 2008-237127 there is disclosed a method for obtaining a soybean protein hydrolysate by enzymolysis of soybean protein, in order to maintain the solubility in salt solutions even after heat treatment.

Mung bean (*Vigna radiata* seed) is a seed with a high level of physiological function that has been used in China as a type of herbal remedy for reducing inflammation, and it is widely consumed in China and Southeast Asia regions. It is also a food that is highly useful as a protein source, since it is not recognized as a major food allergen.

US Patent No. 4111927 examines the salt solubility of mung bean protein extracted from mung bean, and teaches that mung bean protein that has been spray-dried without sterilization can easily dissolve in salt solutions. The solubility of mung bean protein in salt solutions is examined in Journal of Food Science. 42, 202-206, 1977, Plant Foods for Human Nutrition. 37, 17-27, 1987.

### Summary

### SUMMARY OF THE INVENTION

When the pickling solution using soybean protein hydrolysate described in JP 2008-237127 is injected into meat, the excessively high soybean protein hydrolysate content in the pickling solution increases the viscosity of the pickling solution, causing problems as injection into meat using an injector becomes more difficult to accomplish. If the soybean protein hydrolysate content is too lowered, on the other hand, the expected gelling ability of the pickling solution is reduced.

While the salt solution solubility of mung bean protein is examined in US Patent No. 4111927, the mung bean protein used is obtained by spray-drying without heat sterilization, and therefore the salt solution solubility of heated mung bean protein is not examined in that publication. Moreover, the mung bean protein used in Journal of Food Science. 42, 202-206, 1977, Plant Foods for Human Nutrition. 37, 17-27, 1987 is basically powdered by freeze-drying, and the implementation of a heat sterilization step such as in food production is not examined. Thus, the solubility of heat-sterilized mung bean protein in salt solutions has been completely hitherto unknown. Furthermore, although the literature contains examples of mung bean protein, it is not widely used in food products.

It is an object of the present invention to obtain a protein composition with high salt solution solubility and high gelling ability. It is another object of the invention to obtain a pickling solution and processed livestock meat utilizing the protein composition.

In the course of conducting diligent research on this problem, the present inventors have found that mung bean protein exhibits high salt solution solubility even after heat sterilization and high gelling ability, and have completed this invention.

The present invention provides a powder composition comprising a mung bean protein, wherein all or a portion of the mung bean protein is heat denatured.

The composition may have an NSSI (nitrogen salt solubility index) of 30 wt% or greater under conditions with a 2.5 wt% concentration NaCl aqueous solution at pH 7.0.

The CP (crude protein content) of the composition may be 80 wt% or greater with respect to the total solid content of the composition.

The invention further provides a processed livestock meat comprising the composition. If the processed livestock meat comprises the aforementioned composition, the resulting processed livestock meat will have suitable hardness.

The invention further provides a pickling solution comprising the composition. If the pickling solution comprises the composition, the resulting pickling solution will have satisfactory manageability with low viscosity.

According to the invention it is possible to obtain a composition with high gelling ability, and having high salt solution solubility even after heat denaturation. A solution in which the composition has been suspended has low viscosity, while also being capable of gelling to high strength when the suspension is heated. When the composition of the invention is used in a pickling solution for processed livestock meat, therefore, it has low viscosity and satisfactory manageability. In addition, when the composition of the invention is used in a processed livestock meat, the processed livestock meat having suitable hardness can be provided.

### BRIEF DESCRIPTION OF THE DRAWINGS

Fig. 1 is a figure showing the results of SDS-PAGE of different protein compositions.
Fig. 2 is a figure showing the results of SDS-PAGE of compositions of mung bean protein isolate.

### Detailed Description of the Invention

### [Description of Embodiments]

Preferred embodiments of the invention will now be explained. However, the present invention is not limited to the embodiments described below.

### (Mung bean protein composition)

In the composition comprising mung been protein of this embodiment (hereunder also referred to as "mung bean protein composition"), all or a portion of the mung bean protein is heat denatured.

### (Mung bean protein)

The mung bean protein source used as the starting material for the mung bean protein composition may be a mung bean protein material containing mung bean protein. The mung bean protein material used may be mung bean milk, starch-removed mung bean milk, mung bean protein isolate or the like, which may be utilized directly or after being dried, and they may also be utilized after being sterilized and dried. Mung bean milk and starch-removed mung bean milk can be obtained by extracting the protein components from whole mung beans or starch-removed mung beans using cold water or hot water, and removing the starch and dietary fiber components from the extracted solution. Additionally, it may be treated with a UF membrane (ultrafiltration membrane) to concentrate the protein components in the mung bean milk. Mung bean protein isolate can be obtained by concentrating the protein using treatment such as isoelectric precipitation from mung bean milk. The obtained mung bean protein composition may contain mung bean protein at 80 wt% or greater with respect to the total solid content of the mung bean protein composition, as CP (crude protein content). Therefore, the whole mung bean or starch-removed mung bean used as the mung bean protein material may have a high protein content in the whole mung bean or starch-removed mung bean.

The mung bean protein isolate can be prepared in the following manner, for example. Specifically, cold water or hot water is added to whole mung bean for immersion from about 10 hours to 30 hours, and after milling, extraction is performed near neutral pH and the seed coats and fiber are removed with a mesh. The starch is then separated out to obtain mung bean milk. Next, the mung bean milk is adjusted to near pH 3.5 to 5.5, and the isoelectric precipitate is collected as mung bean protein isolate. Water and an alkali agent are added to the obtained isoelectric precipitate (mung bean protein isolate), and the mixture is adjusted to the neutral pH range. At this time, the mung bean protein isolate concentration may be adjusted to 5 to 15 wt% as solid content. The solution may be adjusted to pH 6.0 to 8.0, or it may be adjusted to the range of pH 6.5 to 7.5. If the pH is 6.0 or higher, the solubility of the mung bean protein in salt solutions will be increased. If the pH is 8.0 or lower, on the other hand, it will be possible to minimize generation of alkali odor by the subsequent heat treatment, resulting in a desirable flavor, and a more satisfactory color tone will be produced. Sodium hydroxide and potassium hydroxide, which are suitable for use in foods, are examples of alkali agents to be used for the neutralization.

### (Method for producing mung bean protein composition)

The mung bean protein composition of this embodiment can be obtained by heating the solution containing the mung bean protein, and denaturing the mung bean protein. The heat treatment conditions may be a heating temperature in the range of 80°C to 160°C, or in the range of 110°C to 150°C. The heating time may be in the range of 2 seconds to 60 minutes, in the range of 5 seconds to 3 minutes or in the range of 5 seconds to 15 seconds. It may be 5 seconds to 15 seconds with in a range of 110°C to 150°C. For the heating system, either indirect heating or direct-heating may be utilized. Of these, from the viewpoint of increasing the solubility in salt solutions, a continuous direct-heating pasteurizer may be used, that maintains heat by directly blowing high-temperature, high-pressure steam onto the solution containing the mung bean protein, and then suddenly releases the pressure in the vacuum flash pan.

### (NSSI)

The mung bean protein composition obtained by the method described above has a high NSSI value even after being heated. The NSSI value is the nitrogen salt solubility index, and it represents the solubility of nitrogen when the protein has been dispersed in a salt solution. For the present specification, the NSSI can be measured in the following manner. The protein composition is incorporated with a 10-fold amount of NaCl aqueous solution (2.5 wt% concentration) to the protein composition and the pH is adjusted to 7.0, propeller stirring is carried out in a thermostatic bath at 5°C, and filter paper is used for filtration. The filter paper used may be a common type used for quantitative tests, and No.5 (5A, 5B or 5C conforming to Japanese Industrial Standard P3801) filter paper may be used. The nitrogen content of the obtained filtrate is measured using the Kjeldahl method, and the NSSI is calculated by dividing this by the total nitrogen content of the protein composition, also measured by the Kjeldahl method, and expressing the result as a percentage. The NSSI value may be 30 wt% or greater, 40 wt% or greater or 50 wt% or greater. A higher NSSI value corresponds to easier solubility of the protein composition in salt solutions, and will tend to allow formation of a stronger gel. The NSSI value may also be no greater than 95 wt% or no greater than 90 wt%.

The mung bean protein composition of this embodiment may be non-hydrolyzed, or it may be a mixture of a non-hydrolyzed mung bean protein composition and the composition hydrolyzed with an enzyme or the like. The degree of hydrolysis of the mung bean protein composition can be expressed as the 0.22 M TCA solubility, measured by the method described below. The 0.22 M TCA solubility of the mung bean protein composition of this embodiment may be 2 to 30 wt%, or 2 to 15 wt%. If the TCA value is within this range it will be possible to form a stronger gel.

The mung bean protein composition obtained by this method may also be formed into a powder. Forming the mung bean protein composition into a powder is preferred in handling as it facilitates dispersion in liquids and allows easier gelling. This is also preferred as it can inhibit proliferation of bacteria and thus improve food hygiene, while also keep transport costs low. The powdering method used may be a method of drying using a spray dryer, in order to improve quality and production cost. The method of spray-drying may be spray-drying with a disc-type atomizer system or a single-fluid or double-fluid nozzle, or the like.

The mung bean protein composition of this embodiment is characterized by comprising a protein composition obtained by heat denaturation of protein derived from mung bean, but it may further comprise protein not derived from mung bean, such as soybean protein or milk protein, or it may comprise components such as fats or oils or emulsifiers.

By suspending the mung bean protein composition obtained by the aforementioned method in water, it is possible to obtain a low-viscosity mung bean protein composition in a liquid state. For example, in the case of a suspension with a mung bean protein composition concentration of 12 wt% of the total, the viscosity may be 150 mPa· s or lower, or 100 mPa· s or lower, as measured with a Brookfield viscometer (10°C, 60 rpm). Also, because the mung bean protein composition has high gelling ability, heating the mung bean protein composition in a liquid state to coagulate the suspension can yield a coagulum with high gel strength. For example, the gel strength of a coagulum product obtained by heating a suspension with a mung bean protein composition concentration of 12 wt% may be 20 gf· cm or greater, or 30 gf· cm or greater.

### (Pickling solution)

The mung bean protein composition obtained by the method described above may be used in a pickling solution for processed livestock meat products or boiled fish paste products, and it is particularly suitable for use in pickling solutions for processed livestock meat products. By using a mung bean protein composition of this embodiment in a pickling solution instead of a composition of soybean protein isolate, it is possible to maintain a low viscosity of the pickling solution, and thus improve manageability during use for livestock meat processing.

Any starting materials commonly used for pickling solutions may be used without any particular restrictions, and for example, there may be used salts, sweeteners such as saccharides, spices, binding reinforcers such as polyphosphates, protein materials such as egg white or soybean protein, coloring agents such as nitrates, emulsification stabilizers such as casein sodium, antioxidants such as ascorbic acid, seasonings such as sodium glutamate or sodium succinate, preservatives such as potassium sorbate, or pigments. These optional materials may be dissolved in water to obtain pickling solutions. When the mung bean protein composition of this embodiment is to be used in a pickling solution, the content of the mung bean protein composition may be 2 to 15 wt% or 2 to 10 wt%, of the total pickling solution. The viscosity of the pickling solution is also affected by the added content of other protein materials and other factors and therefore cannot be specified for all cases, but when the mung bean protein composition of this embodiment is used at 2 to 10 wt% in a pickling solution, for example, it may be in the range of 20 to 100 mPa·s at 10°C. When the mung bean protein composition of this embodiment is used in a pickling solution under these conditions, manageability during injection of the pickling solution is satisfactory and it is possible to obtain ham that is deformable and has satisfactory hardness.

### (Processed livestock meat)

The mung bean protein composition obtained by the method described above has high salt solution solubility and high gelling ability, and can therefore be suitably used as a pickling solution for processed meat products. Processed meat products include processed livestock meats, and boiled fish paste products made by using fish meat as the main starting material. Of these, the pickling solution of this embodiment can be suitably used particularly for processed livestock meat. Examples of livestock meat that may be used include meat from cattle, pigs, horses, sheep, goat, rabbit and poultry. Also, examples of processed livestock meats include kneaded livestock meat such as sausage, minced meat products such as hamburger, meatball, jiaozi, shumai, minced meat cutlet and croquette, and pork cutlet, ham and the like, and in particular it may be used in ham and sausages.

The method for producing processed livestock meat may be a known method. When producing ham, for example, including a mung bean protein composition of this embodiment in the pickling solution used can yield ham comprising the mung bean protein composition of this embodiment. Specifically, a pickling solution containing the mung bean protein composition is injected into a mass of livestock meat using an injector, and the meat mass is tumbled to make fit the pickling solution to the meat mass and then stuffed into a casing for molding. Next, heating may be carried out by smoking or steaming to obtain ham having suitable hardness. For production of pork cutlet, for example, a pickling solution containing the mung bean protein composition is injected into a mass of pork with an injector, and the meat mass is tumbled to make fit the pickling solution to the meat mass, and sliced. It may then be covered with a butter solution and surrounded with bread crumbs or the like and fried, to obtain pork cutlet having satisfactory chewability and high yield. For production of a kneaded livestock meat product, on the other hand, the mung bean protein composition may be used in direct admixture with the other starting materials, instead of as a pickling solution. For example, one method of producing sausages may involve directly adding the mung bean protein composition of this embodiment when adding and mixing common additives such as starch or lard to minced meat with an added salting agent. By mixing these starting materials and stuffing them into a casing such as sheep intestine and heating by a method such as steaming, it is possible to obtain sausage comprising a mung bean protein composition of this embodiment. When the mung bean protein composition of this embodiment is to be used in a processed livestock meat, the content may be, for example, 1 to 7.5 wt% of the total processed livestock meat. If the content of the mung bean protein composition is within this range it will be possible to obtain processed livestock meat at high yield, and having satisfactory deformable hardness.

The method for measuring the concentration of the mung bean protein in the pickling solution and processed livestock meat may be Western blotting, for example. That is, a sample buffer containing SDS and a reducing agent such as 2-mercaptoethanol is added to the liquid or crushed sample to be measured, and extraction of the protein is performed in boiling water for 10 minutes. Next, mung bean proteins adjusted in several different concentrations (controls) are used for SDS-PAGE simultaneously with the sample, and transfer to a PVDF (Polyvinylidene difluoride) membrane by a semi-dry method. Anti-mung bean protein antibody, as primary antibody, is reacted with the transferred membrane, and antibody labeled with AP (Alkaline phosphatase) or HRP (Horse radish peroxidase) is used as secondary antibody for reaction with the primary antibody, to allow quantitation of the mung bean protein based on coloration by enzyme activity or the like.

### [Examples]

Embodiments of the present invention will now be explained in detail by examples, with the understanding that the invention is in no way limited to the examples.

### (Production Example 1)

After adding 1 part by weight of whole mung bean to 5 parts by weight of water, it was immersed for 22 hours and the husks and embryonic areas were separated and removed by an established method. Next, a colloid mill (product of Primix Corp.) was used for milling, the pH was adjusted to 8.5, extraction was performed at 50°C for 30 minutes while stirring with a homomixer (product of Primix Corp.), and centrifugal separation was carried out at 3,000 × g to remove the insoluble matter and obtain starch-removed mung bean milk. The obtained starch-removed mung bean milk was adjusted to pH 4.5 with hydrochloric acid for isoelectric precipitation, and subjected to centrifugal separation to obtain a precipitate as acid-precipitated curd. Water was added in a 4-fold amount to the acid-precipitated curd, and the pH was adjusted to 7.0 with sodium hydroxide to obtain a solution containing mung bean protein isolate.

### (Example 1) Composition of mung bean protein isolate

The solution containing mung bean protein isolate obtained in Production Example 1 was heated at 120°C for 10 seconds each using a continuous direct-heating pasteurizer (product of Alfa Laval AB), spray-drying was carried out with a spray drier to obtain a composition of mung bean protein isolate, and a heat-denatured powdered composition of mung bean protein isolate was obtained.

### (Comparative Production Example 1) Composition of soybean protein isolate

A 10 kg of low-denatured defatted soybean by Fuji Oil Co., Ltd. was incorporated with a 15-fold amount of water, the pH was adjusted to 7.5 with IN NaOH, and the mixture was stirred for 1 hour using a homomixer at room temperature for extraction, after which the okara component was removed by a centrifugal separator (1000 g × 10 min) to obtain defatted soy milk. After adding IN HCl to this and adjusting the pH to 4.5, the protein component was precipitated by isoelectric precipitation, and centrifugation was performed to collect the precipitate and obtain curd of soybean protein isolate. The solid content of the curd was approximately 30 wt%. Water was added to the curd to a solid content of 11 wt% as the total, and sodium hydroxide was used for neutralization to pH 7.0 to obtain a solution containing soybean protein isolate.

### (Comparative Example 1) Composition (a) of soybean protein isolate

The obtained solution containing soybean protein isolate was heated and dried in the same manner as Example 1, to obtain composition (a) of soybean protein isolate.

### (Comparative Examples 2 to 4) Compositions (b) to (d) of soybean protein isolate

To the solution containing soybean protein isolate obtained in Comparative Production Example 1 there was added the *Bacillus subtilis*-derived protease "PROTIN AC10F" (product of Daiwa Fine Chemicals Co., Ltd.) at 0.02, 0.04 and 0.06 wt% as solid content, and the protein was hydrolyzed for 30 minutes at a reaction temperature of 55°C. The enzyme-treated solution of soybean protein isolate was heated and dried in the same manner as Example 1, to obtain compositions (b) to (d) of soybean protein isolate.

### (Comparative Example 5) Composition of chickpea protein isolate

Dehusked chickpeas were used for preparation in the same manner as Production Example 1 and Example 1, to obtain a composition of chickpea protein isolate.

### (Comparative Example 6) Composition of pea protein isolate Dehusked peas (yellow peas) were used for preparation in the same manner as Production Example 1 and Example 1, to obtain a composition of pea protein isolate.

### (Comparative Example 7) Unheated composition of mung bean protein isolate

The solution containing mung bean protein isolate obtained in Production Example 1 was subjected to spray-drying with a spray drier, without heat sterilization, to obtain an unheated composition of mung bean protein isolate.

The CP (crude protein contents) of the protein compositions obtained in Example 1 and Comparative Examples 1 to 5 were measured. Also, the NSI (nitrogen solubility index), NSSI (nitrogen salt solubility index), TCA solubility and pH of each protein composition were measured. The suspension viscosity and coagulated gel strength were also measured, using a 12 wt% suspension of each protein composition. The results are shown in Table 1. The measuring method for each property is described below.

### (Crude protein content)

Using the protein composition that had been dried at 105°C for 12 hours, the amount of nitrogen measured by the Kjeldahl method was multiplied by a nitrogen coefficient of 6.25 to determine the crude protein content (CP), which was expressed as wt% with respect to the total solid content of the protein composition.

### (NSI)

A 5 wt% aqueous solution of protein composition was adjusted to pH 7.0, the aqueous solution was stirred by propeller stirring for 1 hour in a thermostatic bath at 37°C and centrifuged for 20 minutes at 7,000 × g (3,500 rpm), after which the supernatant was filtered with No.5 (5A) filter paper. The nitrogen content of the obtained filtrate is measured using the Kjeldahl method, and was divided by the total nitrogen content of the protein composition, also measured by the Kjeldahl method, to calculate the NSI (nitrogen solubility index), and expressing the result as a percentage.

### (NSSI)

The protein composition was incorporated with a 10-fold volume of a NaCl aqueous solution (2.5 wt% concentration) to the protein composition and the pH was adjusted to 7.0, and the mixture was stirred by propeller stirring for 1 hour in a thermostatic bath at 5°C and centrifuged for 20 minutes at 7,000 × g (3,500 rpm), after which the supernatant was filtered with No.5 (5A) filter paper. The nitrogen content of the obtained filtrate is measured using the Kjeldahl method, and was divided by the total nitrogen content of the protein composition, also measured by the Kjeldahl method, to calculate the NSSI (nitrogen salt solubility index), and expressing the result as a percentage.

### (0.22 M TCA solubility)

To a 2 wt% suspension of the protein composition there was added an equivalent volume of a 0.44 M trichloroacetic acid (TCA) aqueous solution, the mixture was stirred and filtered using No.5 (5A) filter paper, and the nitrogen content in the filtrate was measured by the Kjeldahl method. The ratio of the measured soluble nitrogen content with respect to the total nitrogen content in the protein composition was recorded as the 0.22 M TCA solubility (wt%).

### (12% Gel strength)

Each protein composition powder was mixed with water to a 12 wt% concentration to form a suspension, blended into a uniform paste using a Waring blender, stuffed into a 25 mm-diameter casing, heated in a 80°C hot water bath for 30 minutes to coagulation, and then water-cooled and was taken out from the casing. The coagulated gel was cut to a thickness of 20 mm and a 5 mm spherical plunger was used to measure the breaking strength (gf) and breaking deformation (cm) using an RHEONER (product of Yamaden Co., Ltd.). The values of the breaking strength and breaking deformation were multiplied and the product was evaluated as the gel strength (gf·cm).

### (12% Viscosity)

Each protein composition powder was mixed with water to a 12 wt% concentration to form a suspension. The viscosity of the suspension was measured using a Brookfield viscometer at 10°C, 60 rpm. The units are mPa· s.

**[Table 1]**

| | Example 1 | Comp. Ex. 1 | Comp. Ex. 2 | Comp. Ex. 3 | Comp. Ex. 4 | Comp. Ex. 5 |
|---|---|---|---|---|---|---|
| | Compositio n of mung bean protein isolate | Composition of soybean protein isolate | | | | Composition of chickpea protein isolate |
| | | a | b | c | d | |
| CP/dry (wt%) | 84.8 | 89.3 | 90.1 | 90.1 | 90.4 | 70.9 |
| NSI (wt%) | 97.8 | 98.0 | 97.0 | 99.0 | 91.0 | 88.3 |
| NSSI (wt%) | 54.8 | 17.0 | 42.0 | 55.0 | 58.0 | 20.0 |
| TCA (wt%) | 3.2 | 3.4 | 5.2 | 11.0 | 17.8 | 3.1 |
| pH | 7.0 | 7.1 | 7.0 | 7.0 | 7.0 | 6.9 |
| 12% Gel strength (gf· cm) | 48.0 | 30.0 | 20.8 | 14.6 | 7.7 | 24.0 |
| 12% Viscosity (mPa· s) | 60 | 670 | 320 | 95 | 60 | 74 |

The NSI value for each of Examples 1 and Comparative Examples 1 to 5 was about 90 wt%, indicating high solubility. On the other hand, the numerical value for the NSSI value representing salt solubility exceeded 50 wt% only with the composition of mung bean protein isolate of Example 1, among the protein compositions that had not been subjected to protein hydrolysis, while the other protein compositions exhibited very low values of 20 wt% or below. Also, compositions (b) to (d) of soybean protein isolate that had been subjected to protein hydrolysis had high NSSI values, but low gel strength. In addition, the viscosity of Example 1 was equivalent to that of composition (d) of soybean protein isolate (Comparative Example 4) that had been subjected to enzymolysis, but the gel strength of Example 1 was much higher than Comparative Example 4, at 48 gf· cm. In other words, the mung bean protein composition had high salt solution solubility without protein hydrolysis, as well as high gelling ability, and was therefore highly suitable for pickling solutions compared to soybean and other bean-derived protein compositions.

### (SDS-PAGE)

It is known that the NSSI of a soybean protein composition decreases by heat treatment, presumably due to formation of macroaggregates as disulfide bond exchange reaction takes place during heating. Therefore, SDS-PAGE was carried out using the heat sterilized composition of mung bean protein isolate (Example 1) and composition (a) of soybean protein isolate (Comparative Example 1), composition of chickpea protein isolate (Comparative Example 5) and composition of pea protein isolate (Comparative Example 6). For SDS-PAGE there was used a 10 to 20 wt% concentration gel (product of Kishida Chemical Co., Ltd.), with Coomassie Brilliant Blue R-250 (CBB) as the dyeing method. SDS-PAGE was conducted under conditions without a reducing agent (2-mercaptoethanol) in the buffering solution dissolving the sample (non-reducing conditions) and with the reducing agent (reducing conditions).

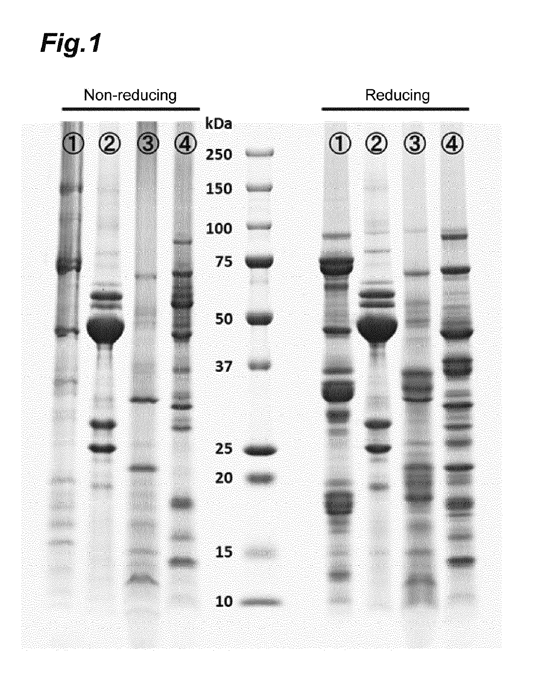

The SDS-PAGE band pattern obtained by staining is shown in Fig. 1. In the SDS-PAGE results shown in Fig. 1, for non-reducing conditions and reducing conditions, lane 1 is for the composition (a) of soybean protein isolate (Comparative Example 1), lane 2 is for the heat-denatured composition of mung bean protein isolate (Example 1), lane 3 is for the composition of chickpea protein isolate (Comparative Example 5) and lane 4 is for the composition of pea protein isolate (Comparative Example 6). The marker is shown in the center lane. With composition (a) of soybean protein isolate (Comparative Example 1), composition of chickpea protein isolate (Comparative Example 5) and composition of pea protein isolate (Comparative Example 6), the band pattern differed significantly between the non-reducing conditions and reducing conditions, with formation of protein aggregates in a range of 150 kDa and larger being observed under the non-reducing conditions. On the other hand, the composition of mung bean protein isolate of Example 1 showed no difference in band pattern between non-reducing conditions and reducing conditions even though it had been heat sterilized, and no formation of macroaggregates was found.

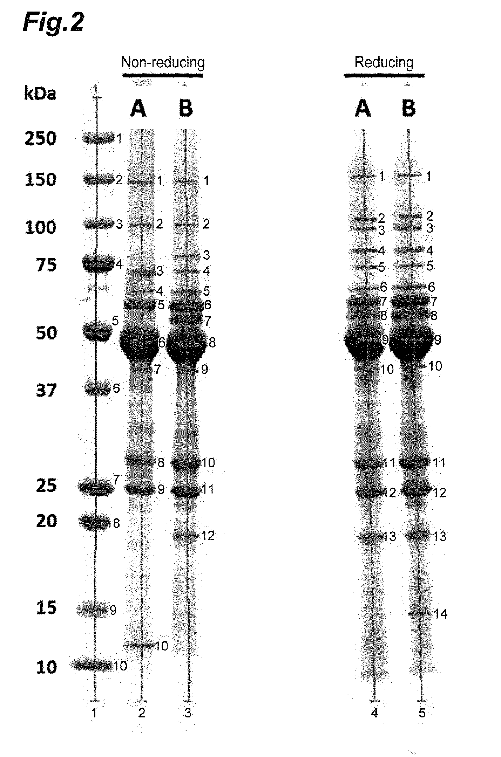

The unheated composition of mung bean protein isolate (Comparative Example 7) and the heat denatured composition of mung bean protein isolate (Example 1) were subjected to SDS-PAGE by the method described above. SDS-PAGE was conducted both under conditions without a reducing agent in the buffering solution dissolving the sample (non-reducing conditions) and under conditions with a reducing agent (reducing conditions). The results are shown in Fig. 2. In Fig. 2, lane A is the unheated composition of mung bean protein isolate of Comparative Example 7, and lane B is the heat denatured composition of mung bean protein isolate of Example 1, under non-reducing conditions and reducing conditions. Under reducing conditions for the unheated composition of mung bean protein isolate, a band at 53 to 55 kDa molecular weight was seen between the band at approximately 56 kDa and the band at approximately 44 kDa, but under non-reducing conditions for the unheated composition of mung bean protein isolate, no band was seen in this region. On the other hand, with the heat denatured composition of mung bean protein isolate, a band at 53 to 55 kDa was observed between the band at approximately 56 kDa and the band at approximately 44 kDa, both under non-reducing conditions and under reducing conditions. In order to calculate the proportion of the 53 to 55 kDa protein constituting the total protein in the heat denatured composition of mung bean protein isolate, a GS-800^{R} Calibrated Densitometer (product of Bio Rad) was used to take up the SDS-PAGE gel, and Quantity One (ver.4.5) (product of Bio Rad) was used for calculation. As a result, the proportion of 53 to 55 kDa protein constituting the total protein of the heat denatured composition of mung bean protein isolate under non-reducing conditions (Example 1) was 9.6%, whereas with the unheated composition of mung bean protein isolate (Comparative Example 7), absolutely no protein was detected in the same 53 to 55 kDa range. The mung bean protein composition was confirmed to be a unique protein composition that did not have impaired solubility in salt solutions, even with heat sterilization that is required for common food production.

### (Example 2 and Comparative Example 8) Pickling solutions

The heat denatured composition of mung bean protein isolate and the composition (a) of soybean protein isolate prepared in Example 1 and Comparative Example 1 were used to prepare pickling solutions having the compositions shown in Table 2, and they were placed in cold storage for one night to obtain pickling solutions for Example 2 and Comparative Example 8, respectively. The units for the mixing ratios in Table 2 are parts by weight. Upon cold storage for one night after preparation, the viscosity of each obtained pickling solution was measured using a Brookfield viscometer at 10°C, 60 rpm. The results are shown in Table 3. In Example 2 that used a composition of mung bean protein isolate, the viscosity of the pickling solution was lower than the Comparative Example 8 that used composition (a) of soybean protein isolate, and the manageability during injection of the pickling solution was more satisfactory.

**[Table 2]**

| Starting material | Example 2 | Comp. Ex. 8 |
|---|---|---|
| Composition of mung bean protein isolate | 6.0 | - |
| Composition (a) of soybean protein isolate | - | 6.0 |
| Dry egg white | 4.0 | 4.0 |
| Casein sodium | 2.0 | 2.0 |
| Sodium nitrite | 0.02 | 0.02 |
| Sodium L-ascorbate | 0.06 | 0.06 |
| Polyphosphate | 0.7 | 0.7 |
| Corn syrup powder | 5.0 | 5.0 |
| Sodium succinate | 0.02 | 0.02 |
| Flavoring | 0.3 | 0.3 |
| Coloring | 0.2 | 0.2 |
| Water | 81.7 | 81.7 |
| Total | 100 | 100 |

### (Ham)

After injecting 100 parts by weight of the pickling solutions obtained in Example 2 and Comparative Example 8 into 100 parts by weight of a mass of pork loin meat using an injector, the meat was tumbled for 15 hours at low temperature with a rotary massage machine and then stuffed into a casing. After heating at 65°C for 30 minutes, it was dried and smoked at 75°C for 30 minutes, steamed at 78°C and cooled to obtain ham. The breaking load of a 5 mm-thick sample of the obtained ham was measured using an RHEONER (product of Yamaden Co., Ltd.). Also, an organoleptic evaluation of the flavor and mouthfeel of the ham was conducted by five trained panelists on a 5-point scale (5: Good, 4: Fair, 3: Normal, 2: Unsatisfactory, 1: Poor), and the average number of points was recorded for the evaluation of flavor and mouthfeel. The results are shown in Table 3. The ham prepared using the pickling solution of Example 2 had higher strength than when using the pickling solution of Comparative Example 8, and the organoleptic evaluation was also superior to Comparative Example 8.

**[Table 3]**

| | | Example 2 | Comp. Ex. 8 |
|---|---|---|---|
| Pickling solution | Viscosity (mPa· s) | 21.3 | 250 |
| Ham | Breaking load (gf) | 4800 | 4588 |
| | Organoleptic evaluation | 5 | 2 |

### (Examples 3 and Comparative Example 9) Sausage

The composition of mung bean protein isolate and composition (a) of soybean protein isolate, prepared in Example 1 and Comparative Example 1, were used to prepare sausages for Example 3 and Comparative Example 9, respectively. Specifically, a salting agent was added to 42 parts by weight of pork (picnic shoulder) minced meat according to the composition shown in Table 4, and a silent cutter was used for thorough mixing, after which each protein composition and the other materials were added and mixed therewith. After deairing the meat material, it was stuffed into sheep intestine and steamed for 78°C, to obtain sausages. The units for the mixing ratios in Table 4 are parts by weight.

**[Table 4]**

| | | Example 3 | Comp. Ex. 9 |
|---|---|---|---|
| Pork/picnic shoulder | | 42.0 | 42.0 |
| Protein | Composition of mung bean protein isolate | 4.0 | - |
| | Composition (a) of soybean protein isolate | - | 4.0 |
| Water | | 16.0 | 16.0 |
| Lard | | 12.0 | 12.0 |
| Ice | | 18.0 | 18.0 |
| Tapioca starch (Z-100) | | 5.0 | 5.0 |
| Salting agent | Salt | 1.2 | 1.2 |
| | Nitrate salt | 0.1 | 0.1 |
| | Phosphate salt | 0.3 | 0.3 |
| Sodium L-ascorbate | | 1.4 | 1.4 |
| Total | | 100.0 | 100.0 |

An organoleptic evaluation was conducted for the mouthfeel and flavor of the prepared sausages. The evaluation method was conducted by five trained panelists on a 5-point scale (5: Good, 4: Fair, 3: Normal, 2: Unsatisfactory, 1: Poor), in the same manner as for the ham, and the average number of points was recorded for the evaluation of mouthfeel and flavor. As a result, the sausage of Example 3 that used heat denatured composition of mung bean protein isolate had a more desirable hard mouthfeel and more desirable flavor compared to Comparative Example 9 which used composition (a) of soybean protein isolate.

Thus, the mung bean protein composition of this embodiment exhibited high solubility in salt solution, and pickling solutions produced using it had low viscosity and excellent manageability. Furthermore, the mung bean protein composition of this embodiment had excellent gelling ability, and by using the mung bean protein composition livestock meat products with excellent quality could be produced.

## Claims

1. A powder composition comprising a mung bean protein, wherein all or a portion of the mung bean protein is heat denatured.

2. The composition according to claim 1, wherein the composition has NSSI (nitrogen salt solubility index) of 30 wt% or greater with a pH of 7.0 and a NaCl aqueous solution concentration of 2.5 wt%.

3. The composition according to claim 1 or 2, wherein the CP (crude protein content) is 80 wt% or greater with respect to the total solid content of the composition.

4. A processed livestock meat comprising the composition according to any one of claims 1 to 3.

5. A pickling solution comprising the composition according to any one of claims 1 to 3.
